# EUROPÄISCHE PATENTSCHRIFT

(11) **EP 1 260 488 B1**
(45) Veröffentlichungstag und Bekanntmachung des Hinweises auf die Patenterteilung: **27.07.2005**
(21) Anmeldenummer: 01112570.5
(22) Anmeldetag: 23.05.2001
(51) Int. Cl.: C03B 9/38, C03B 9/16

(54) **Formensatz für die Herstellung von Hohlglasprodukten**
Moulds for the making of hollow glassware
Moules pour la fabrication d' objets en verre creux

(43) Veröffentlichungstag der Anmeldung: 27.11.2002
(73) Patentinhaber: Heinz Glas GmbH, 96355 Kleintettau (DE)
(72) Erfinder: Neubauer, Günter, 96337 Ludwigsstadt (DE)
(74) Vertreter: Zipse & Habersack

(56) Entgegenhaltungen:
- DE-C- 3 123 488

## Beschreibung

Die vorliegende Erfindung betrifft einen Formensatz für die Herstellung von Hohlglasprodukten. Derartige Glasformen sind kopfseitig in der Regel mit einer Blasvorrichtung verbindbar und bestehen aus mindestens drei Teilen, nämlich mindestens zwei Mantelteilen und einer Bodenplatte. Die Pressform enthält an ihrer dem Blaskopf zugewandten Seite eine Öffnung zum Einführen des Glaspostens und zum Blasen des Produktes. Da der Glasposten mit einer sehr hohen Temperatur von etwa 1000 ° C in die Form eingebracht wird, muss diese gekühlt werden, um einerseits nicht zu stark zu erhitzen und um andererseits auf einer möglichst konstanten Temperatur gehalten zu werden, um reproduzierbare Glasergebnisse zu erzielen.

Aus diesem Grunde sind die Mantelteile innerhalb der Materialstärke mit in der Regel axialen Kühlluftkanälen versehen, die mit Bohrungen in der Bodenplatte fluchten. Die Kühlluftkanäle sollten möglichst nah und in definierter Entfernung von den Innenwänden der Form angeordnet sein. Dies führt dazu, dass eine Bodenplatte mit zwei oder mehreren Mantelformteilen eine Herstellungsform für ein Hohlglasprodukt bildet. Soll ein anderes Hohlglasprodukt hergestellt werden, so ändert sich in der Regel die Innenform und somit auch die Anordnung der Kühlkanäle, was dazu führt, dass für jedes Produkt sowohl separate Mantelteile als auch eine separate Bodenplatte erforderlich sind.

Es ist Aufgabe der vorliegenden Erfindung, einen Formensatz bereitzustellen, der die Herstellung unterschiedlicher Hohlglasprodukte mit einem geringeren Werkzeugaufwand ermöglicht.

Die Aufgabe wird erfindungsgemäß durch einen Formensatz gemäß Anspruch 1 gelöst. Vorteilhafte Weiterbildungen der Erfindung sind Gegenstand der Unteransprüche.

Erfindungsgemäß hat die Bodenplatte nicht mehr die Zuführungsbohrungen für jeden einzelnen Kühlkanal der Mantelteile, sondern eine standardisierte Kühlfluidbohrung, die mit wenigstens einer - vorzugsweise einer - Kühleintrittsöffnung eines Mantelteils fluchtet. In dem Mantelteil ist wenigstens ein Verteilerkanal angeordnet, um das Kühlfluid, insbesondere die Kühlluft von der Kühleintrittsöffnung auf alle Kühlkanäle in dem Mantelteil zu verteilen.

Die standardisiert angeordneten Kühleintrittsöffnungen können in Mantelteilen für unterschiedliche Produkte in gewissen Grenzen standardisiert in Übereinstimmung mit der Anordnung der Bohrungen in der Bodenplatte angeordnet sein.

Dies hat mehrere Vorteile. Zum einen kann eine Bodenplatte mit mehreren unterschiedlichen Mantelteilen für unterschiedliche Hohlglasprodukte verwendet werden, sofern die Bodenform übereinstimmt. Zum anderen kann das Vorsehen von aufwändigen Adapterplatten in der Herstellungsvorrichtung entfallen, die bislang eine zentrale Kühlluftzufuhr auf die einzelnen Kühlkanäle der Mantelteile aufgefächert haben. Diese Auffächerung des Kühlluftstromes wird nun erfindungsgemäß in der Form selbst vorgenommen, so dass die Maschine selbst kostengünstiger herstellbar ist. Entsprechend werden also nicht nur Bodenplatten gespart, da nicht mehr für jedes einzelne Produkt eine separate Bodenplatte vorgesehen sein muss und zum anderen wird die Herstellung der Produktionsmaschine selbst durch Wegfall der Adapterplatte günstiger.

Vorzugsweise sind pro Herstellungsform zwei oder drei, in Ausnahmefälle auch vier Mantelteile vorgesehen. Vorzugsweise sind pro Mantelteil eine Bohrung in der Bodenplatte vorgesehen, die mit den Kühleintrittsöffnungen der Mantelteile fluchtet. Durch das Vorsehen lediglich einer Kühleintrittsöffnung pro Mantelteil und einer entsprechend geringen Anzahl von Kühlfluidbohrungen in der Bodenplatten kann die Mimik für die Kühlung der Form wenig aufwändig und damit kostengünstig gehalten werden.

Vorzugsweise kann die Bodenplatte auch mehrteilig ausgebildet sein und auswechselbare Formeinsätze zur Herstellung von Formen mit unterschiedlichem Bodenbereich enthalten.

Die Bodenplatte enthält selbstverständlich in üblicher Weise die Ansaugmimik zum Einziehen des Glaspostens in die Form.

Vorzugsweise enden die Kühlkanäle auf Seiten der Blasvorrichtung im Freien. Es kann jedoch auch eine Zusammenfassung der einzelnen Kühlkanäle in einen Kühlaustrittskanal vorgesehen sein, der ebenfalls in standardisierter Weise angeordnet ist. Selbstverständlich ist es möglich, die Luft auch von oben, d.h. von der Blasvorrichtung aus in die Form einzuführen und über die Bodenplatte abzuleiten.

Die Erfindung wird nachfolgend beispielsweise anhand der schematischen Zeichnung beschrieben. In dieser zeigen:
- Fig. 1: Eine Aufsicht auf die Bodenplatte einer erfindungsgemäßen Herstellungsform,
- Fig. 2: eine Aufsicht auf die Fertigform, bestehend aus Bodenplatte und zwei Mantelteilen gemäß Figur 1, und
- Fig. 3: eine teilgeschnittene Seitenansicht der Fertigform aus Figur 2.

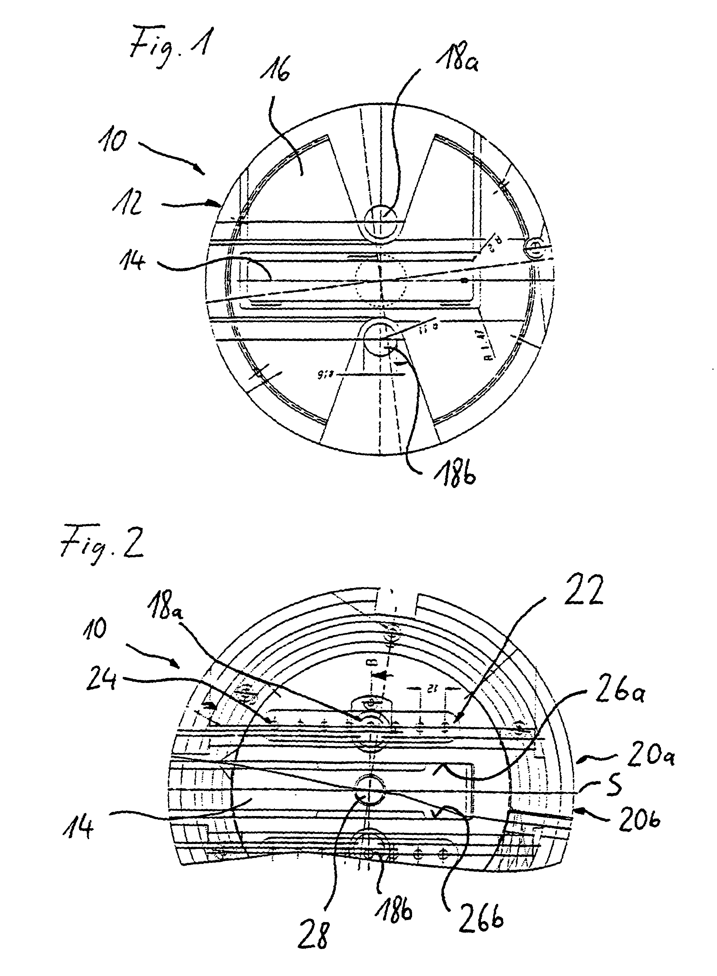

Figur 1 zeigt die Bodenplatte 12 einer Herstellungsform 10 eines rechteckigen Glasflakons. Die Bodenplatte 12 hat an ihrer Oberseite einen Formbereich 14, der an dem in die Glasform eingeführten Glasposten anliegt und die äußere Bodenwandung des Hohlglasproduktes definiert. Im übrigen hat die Bodenplatte 12 Anlagebereiche 16 zur Anlage an die Mantelteile der Herstellungsform 10. Beidseitig des Formbereiches 14 sind Durchbohrungen 18 angeordnet, durch welche Kühlluft den Mantelteilen in nachfolgend gezeichneter Weise zugeführt wird.

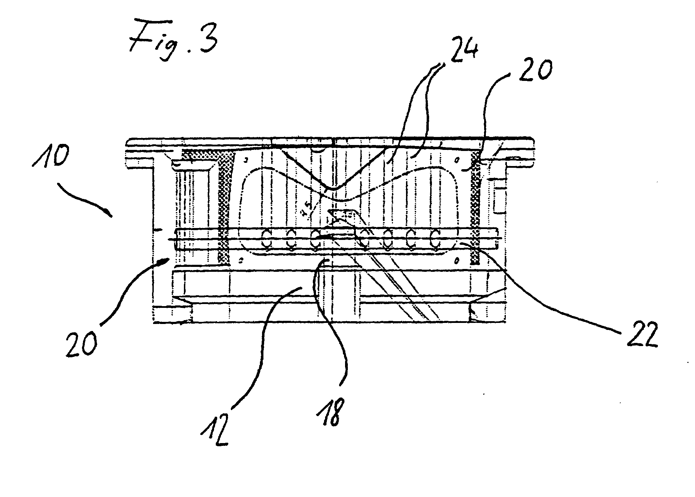

Die Figuren 2 und 3 zeigen die Herstellungsform 10 mit der Bodenplatte 12 und aufgesetzten Mantelteilen 20 a,b. Die Durchbohrungen 18 a,b, die an definierten Stellen in der Bodenplatte 12 angeordnet sind, sind im zusammengesetzten Zustand der Blasform 10 mit Kühleintrittsöffnungen der Mantelteile 20 a,b verbunden von wo die Kühlluft über jeweils einen im Mantelteil 20 a,b angeordneten horizontal verlaufenden Verteilerkanalkanal 22 zu den vom Verteilerkanal abzweigenden vertikalen Kühlkanälen 24 strömt. Um eine effektive Kühlung der Form zu ermöglichen liegen die Kühlkanäle 24 in einem relativ geringen Abstand zu den Seitenwänden 26 des Mantelteils 20, welche zusammen mit dem Formbereich 14 der Bodenplatte die geschlossene Pressform bilden.

Die komplette Pressform besteht aus der Bodenplatte 12 und den zwei Mantelteilen 20a, 20b, die entlang der sich in Längsachse des Formbereichs 14 erstreckenden Trennlinie S aneinander an. Die einander gegenüberliegenden Innenwände 26a, 26b der Mantelteile 20 a,b begrenzen die Außenform des Hohlglasproduktes zusammen mit dem Bodenbereich 14 der Bodenplatte 12. Bei den aus den drei Teilen 12, 20a und 20b zusammengesetzten Herstellungsformen 10 verbleibt an der Oberseite der Mantelteile 20a, 20b ein Blasloch 28, durch welches der Glasposten eingesogen und nachher aufgeblasen wird. Die Pressform ist in nicht näher bezeichneter Weise mit einer Einrichtung zum Anlegen eines Vakuums versehen, um den Glasposten in die zusammengesetzte Form einzuziehen.

Durch das Vorsehen lediglich zweier definierter Durchbohrungen 18 zur Zuführung der Druckluft in die Kühlkanäle 24 der Mantelteile 20a, 20b wird erreicht, dass diese Bodenplatte zusammen mit anderen Mantelteilen verwendet werden kann, die eine andere Konstellation an Kühlkanälen entsprechend einer anderen Ausbildung der Innenflächen 26a, 26b aufweisen. Hierdurch ist es möglich, eine Bodenplatte mit unterschiedlichen Mantelteilen, d.h. Mantelteile für unterschiedliche Hohlglasprodukte zu verwenden, natürlich begrenzt durch den Formbereich 14 der Bodenplatte 12 selbst.

Im Gegensatz dazu war im Stand der Technik für jeden Kühlkanal 24 eines Mantelteils eine entsprechend angeordnete Durchbohrung in der Bodenplatte vorgesehen, was es notwendig machte, für jedes Hohlglasprodukt, selbst mit identischem Bodenformbereich 14, eine separate Bodenplatte vorzusehen. Dies wiederum macht es nötig, in der Herstellungsmaschine selbst eine Adapterplatte für die Kühlluftzuführung zu unterschiedlichen Formen einzusetzen. Dieser Aufwand kann nun aufgrund der definierten Anordnung und geringeren Anzahl an Bohrungen 18 erheblich reduziert werden.

## Patentansprüche

1. Formensatz für die Herstellung von Hohlglasprodukten, umfassend pro Herstellungsform (10) eines Hohlglasprodukts wenigstens eine Bodenplatte (12) und wenigstens zwei Mantelteile (20a,b), die zu einer Form zusammensetzbar sind,
die Bodenplatte (12) und die Mantelteile (20a,b) bestehen zumindest überwiegend aus Metall,
die Mantelteile (20a,b) haben mehrere innerhalb der Materialstärke ausgebildete Kühlkanäle (24), die zur Bodenplatte (12) hin in wenigstens eine Kühleintrittsöffnung münden,
die Kühleintrittsöffnung der Mantelteile (20a,b) fluchtet in zusammengebautem Zustand der Form mit wenigstens einer Kühlfluidbohrung (18a,b), die in der Bodenplatte (12) an definierter Stelle ausgebildet ist,
die Kühlfluidbohrung (18a,b) einer Bodenplatte (12) passt mit der zugewandten Kühleintrittsöffnung von Mantelteilen (20a,b) für verschiedene Hohlglasprodukte mit unterschiedlichen Anordnungen der Kühlkanäle zusammen, und
in jedem Mantelteil (20a,b) ist wenigstens ein Verteilerkanal (22) zum Aufteilen des Fluidstroms von der Kühleintrittsöffnung auf mehrere Kühlkanäle (24) innerhalb des Mantelteils vorgesehen.

2. Formensatz nach Anspruch 1, bei dem von der Kühlfluidbohrung (18 a,b) in der Bodenplatte (12) auch die Kühlkanäle (24) für die Bodenplatte (12) abzweigen.

3. Formensatz nach Anspruch 1 oder 2,
bei dem die Anzahl der Kühlfluidbohrungen (18,b) der Bodenplatte (12) der Anzahl der Mantelteile (20a,b) der Form entspricht und pro Mantelteil eine Kühleintrittsöffnung vorgesehen ist.

4. Formensatz nach einem der vorhergehenden Ansprüche,
bei dem die Form geschlossen ist und an der der Bodenplatte (12) abgewandten Seite der Mantelteile (20a,b) die Kühlkanäle (24) nach außen offen sind.

5. Formensatz nach einem der vorhergehenden Ansprüche,
bei dem die Bodenplatte (12) an ihrer formbildenden Innenseite (14) ein auswechselbares Element für unterschiedliche Produkte aufweist.

## Claims

1. A mold assembly for the production of hollow glassware comprising for each hollow glassware product mold (10) at least one bottom plate (12) and at least two shell parts (20a,b) for assembling into a mold,
said bottom plate (12) and shell parts (20a,b) being made of metal at least substantially,
said shell parts (20a,b) having configured within the material thickness a plurality of cooling channels (24) porting in the direction of said bottom plate (12) into at least one cooling inlet port,
said cooling inlet port of said shell parts (20a,b) aligning in the assembled condition of said mold with at least one cooling fluid bore (18a,b) configured in said bottom plate (12) at a defined location,
said cooling fluid bore (18a,b) of a bottom plate (12) conforming with the facing cooling inlet port of shell parts (20a,b) for various hollow glassware products having differing arrangements of said cooling channels, and
in each shell part (20a,b) at least one distributor channel (22) is provided for splitting the fluid flow from said cooling inlet port to a plurality of cooling channels (24) within said shell part.

2. The mold assembly as set forth in claim 1 wherein also said cooling channels (24) for said bottom plate (12) branch off from said cooling fluid bore (18a,b) in said bottom plate (12).

3. The mold assembly as set forth in claim 1 or 2 wherein the number of cooling fluid bores (18a,b) of said bottom plate (12) corresponds to the number of shell parts (20a,b) of said mold and a cooling inlet port being provided for each shell part.

4. The mold assembly as set forth in any of the preceding claims wherein said mold is closed and at the side of said shell parts (20a,b) facing away from said bottom plate (12) said cooling channels (24) are open outwardly.

5. The mold assembly as set forth in any of the preceding claims wherein said bottom plate (12) comprises at its mold-forming inner side (14) a member replaceable for differing products.

## Revendications

1. Ensemble de moules pour la fabrication de produits en verre creux, comprenant par moule de fabrication (10) d'un produit en verre creux, au moins une plaque de fond (12) et au moins deux parties d'enveloppe (20a, b) qui sont susceptibles d'être assemblés en une forme ; la plaque de fond (12) et les parties d'enveloppe (20a, b) étant composées en grande partie, au moins de métal, les parties d'enveloppe (20a, b) ayant plusieurs canaux de refroidissement (24) formés à l'intérieur de l'épaisseur de matériau qui conduisent vers la plaque de fond (12) dans au moins un orifice d'entrée de refroidissement, l'orifice d'entrée de refroidissement des parties d'enveloppe (20a, b) étant aligné dans un état assemblé du moule avec au moins un alésage de fluide de refroidissement (18a, b) qui est formé dans la plaque de fond (12) à un endroit prédéterminé,
l'alésage de fluide de refroidissement (18a, b) d'une plaque de fond (12) étant adapté avec l'orifice d'entrée de refroidissement orienté vers ledit alésage de parties d'enveloppe (20a, b) pour différents produits en verre creux avec des dispositions différentes des canaux de refroidissement, et
dans chaque partie d'enveloppe (20a, b) on a prévu au moins un canal de répartition (22) destiné à répartir le courant de fluide de l'orifice d'entrée de refroidissement vers plusieurs canaux de refroidissement (24) à l'intérieur de la partie d'enveloppe.

2. Ensemble de moules selon la revendication 1, où les canaux de refroidissement (24) pour la plaque de fond (12) bifurquent aussi à partir de l'alésage du fluide de refroidissement (18a, b) dans la plaque de fond (12).

3. Ensemble de moules selon la revendication 1 ou 2, où le nombre des alésages de fluide de refroidissement (18a, b) de la plaque de fond (12) correspondent au nombre des parties d'enveloppes (20a, b) et où par partie d'enveloppe on a prévu un orifice d'entrée de refroidissement.

4. Ensemble de moules selon une des revendications précédentes où la forme est fermée et les canaux de refroidissement (24) sont ouverts vers l'extérieur du côté des parties d'enveloppe (20a, b) détournées de la plaque de fond (12).

5. Ensemble de moules selon une des revendications précédentes, où la plaque de fond (12) présente sur son côté intérieur (14) formant une forme, un élément susceptible d'être échangé pour des produits différents.
